# EUROPEAN PATENT SPECIFICATION

(11) **EP 0 444 335 B1**
(45) Date of publication and mention of the grant of the patent: **07.12.1994**
(21) Application number: 90302040.2
(22) Date of filing: 27.02.1990
(51) Int. Cl.: D21C 9/08, D21C 3/20, C08B 3/06, D21C 9/10

(54) **Methods for producing bleached, mercerized and unmercerized cellulose and for producing cellulose triacetate therefrom**
Verfahren zur Herstellung von gebleichter merzerisierter und unmerzerisierter Zellulose und zur Herstellung von Zellulosetriazetat daraus
Procédé pour l'obtention de cellulose blanchie mercerisée et non mercerisée, et pour produire du triacétate de cellulose

(43) Date of publication of application: 04.09.1991
(73) Proprietor: TIGNEY TECHNOLOGY INC., Sherwood Park Alberta T8A 4T6 (CA)
(72) Inventor: De Long, Edward Albert, Alberta, Canada T8A 4T6 (CA); De Long, Edward Paul, Alberta, Canada T8A 4T6 (CA)
(74) Representative: Overbury, Richard Douglas

(56) References cited:
- CA-A- 1 268 760
- GB-A- 2 000 822
- US-A- 2 187 710

## Description

A key requirement in the application of this patent is the prior use of the Steam Explosion Process as outlined in Canadian Patents #1,217,765 or 1,141,376 entitled "A Method for Rendering Lignin Separable from Cellulose and Hemicellulose in Lignocellulosic Material and the Product so Produced" or competing versions thereof.

Until the invention of the process to render Lignin separable from Cellulose and Hemicellulose, there was no known economically viable process to cleanly sever the cross links between the chemically reactive Lignin and the xylan component of the Hemicellulose, which in turn permits their separation from the Cellulose in dissociated lignocellulosic material by non reactive solvent extraction.

In this specification, "lignocellulosic material" includes such plant growth materials as bagasse, rice straw, wheat straw, oat straw, barley straw, and woods of various species, particularly hardwoods. Lignocellulosic material is comprised of three main chemical components --Lignin, Hemicellulose and Cellulose -- in the following approximate proportions, plus ash, oils and trace elements:

| Hardwoods: | |
|---|---|
| Lignin | 21% |
| Hemicellulose | 27% |
| Cellulose | 50% |

| Annual Plant Material (Straw, Bagasse, etc.) | |
|---|---|
| Lignin | 15% |
| Hemicellulose | 35% |
| Cellulose | 48% |

The Cellulose and Hemicellulose are both carbohydrates. Cellulose is nature's most abundant organic chemical, Hemicellulose is second and Lignin is third. Cellulose is composed of six-carbon (glucose) sugar molecules. The Xylan component (approximately 70%) of the Hemicellulose in annuals and hardwoods is an amorphous carbohydrate polymer comprised mainly of five-carbon (Xylose) sugar molecules. The Lignin is a complex amorphous hydrocarbon molecule comprised of many of the chemical components found in oil and gas, such as phenol, benzene, propane, etc. The function of these three materials in the lignocellulosic complex is as follows:
- The core of the lignocellulosic fibre is comprised primarily of Cellulose. Cellulose is the skeleton and the structural strength member in the fibre structure. It occurs as bundles of crystalline fibrils, hinged about every 300 glucose molecules, which support the fabric of the tree or plant.
- The Hemicellulose and Lignin are crosslinked to form a matrix which surrounds the Cellulose skeleton and holds the structure together in the manner of resin in a fibreglass composite.

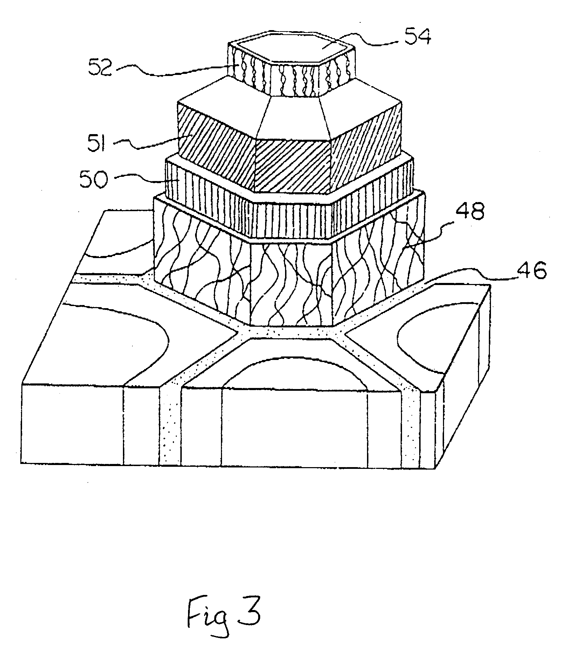

Figure 3 is a representation of a lignocellulosic fibre where the dotted area 46 is called the Middle Lamella. The Middle Lamella 46 is the glue which holds adjacent fibres together. It contains crosslinked lignin and xylan in a ratio of about 70 to 30. The Primary Wall 48 is an outer casing around the fibre core, much like the casing on an underground telephone cable. It contains cross linked lignin and xylan in about equal quantities with a small amount of cellulose to provide structural strength. The fibre bundle or core 50, 51 and 52 consists of closely bound cellulose fibrils. Each fibril is bound to the adjacent fibrils by a further coating of crosslinked lignin and xylan. The ratio of lignin to xylan in the fibre core is 30 to 70, but because of its large volume relative to the Middle Lamella and Primary Wall, 70 percent of the lignin is found in the fibre bundle. The fibrils in the fibre bundle form a slight spiral along the direction of the fibre and each fibril is hinged by an amorphous area which occurs about every 300 glucose molecules in the fibril. It is this hinge which is the weakest link in the fibril and is the point where fibrils are broken and thereby converted to microfibrils by the Explosion Process when operated according to the teachings of CA-A-1,217,765. Finally, the lumen 54 is a hollow area in the middle of the fibre bundle where liquids migrate through the lignocellulosic composite to provide nourishment to the plant.

It is this Lignin/Hemicellulose matrix surrounding the cellulose which provides nature's protection against microbial invasion. It also renders the material water resistant and inaccessible to chemical reagents.

With the application of the teachings of CA-A-1,217,765 and 1,141,376, the problem which has baffled scientists and engineers for more than a century, of how to break the inter-molecular cross-links between the Lignin and the Hemicellulose without causing substantial degradation of either of these chemical components has been solved. Once the inter-molecular cross-links in the lignocellulosic material have been severed, it is relatively simple to partition the material into its three main chemical components (Lignin, Xylan and Cellulose) using mild organic solvents or weak caustic solutions.

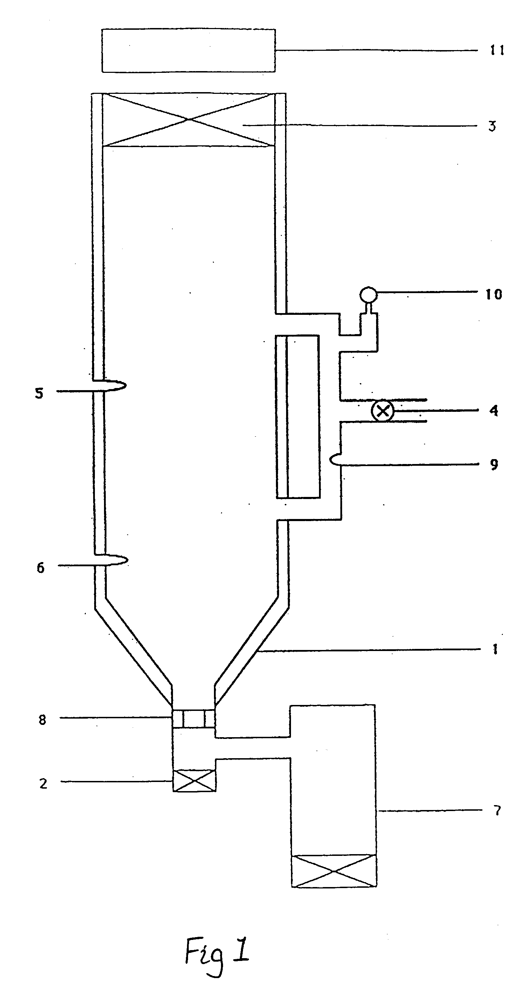

The apparatus to implement this process is shown in Figure 1, where 1 is a pressure vessel having a valved outlet 2 at the base and a loading valve 3 at the top. 4 is the steam input valve. 5 & 6 are thermocouples designed to measure the temperature of the material in the pressure vessel. 9 is a thermocouple in the steam input line to measure the temperature of the input steam. 10 is a pressure gauge to measure the input steam pressure. 7 is a condensate trap to hold water condensate which is produced during the heating cycle of the material, when the hot steam is admixed with the much colder input lignocellulosic material. As the material draws heat from the steam, condensate is produced which runs to the bottom of the digester and into the condensate trap 7. 8 is an optional die which can provide various orifice constrictions to provide more or less abrasion during explosive decompression dependent of the end application of the processed material. 11 is mechanically divided input lignocellulosic feedstock.

In brief, the Steam Explosion Process brings the whole lignocellulosic material to a softened state (at the glass transition temperature of the Cellulose) by heating the material to 234 degrees celcius, at which point it is explosively decompressed through a narrow orifice. The tremendous shearing forces present during the explosion, depolymerize the macromolecules into smaller units, mechanically. Cellulose is fractured at its amorphous hinges, which are the weakest links in the Cellulose chain. This results in Cellulose at a DP in the range of 200 to 500. If a higher DP cellulose product is desired, the input lignocellulosic material can be processed according to the teachings of CA-A-1,141,376. The crosslinks between the Xylan component of the Hemicellulose and the Lignin are fractured and the Lignin becomes carbohydrate free.

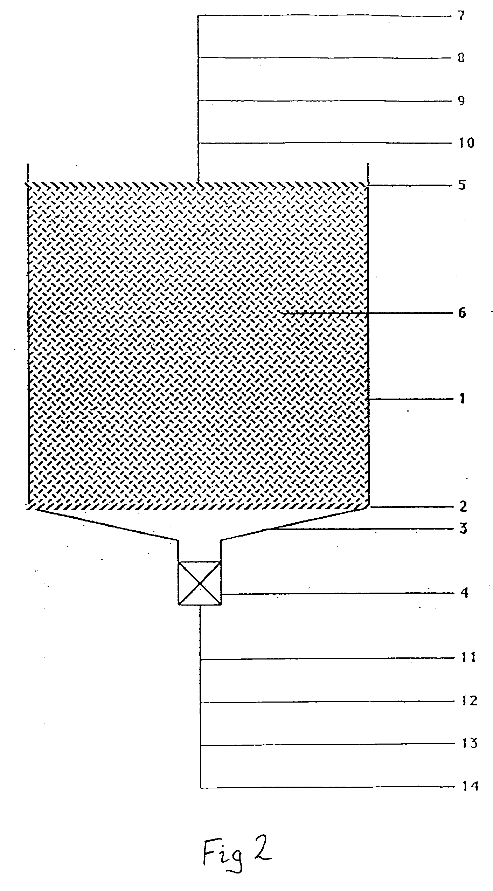

A preferred method of solvent extracting the dissociated material, although conventional pulp washers and filters can be used, is in a column (See figure 2) containing the particulate material. The various solvents such as water, alcohol and caustic are poured through the material in a plug flow manner in the sequence water, alcohol and caustic or water and caustic. After the caustic extraction the residual high purity Cellulose material can be bleached in conventional bleaching systems or is preferably bleached by passing bleach, usually buffered hypochlorite, through the material while it is still contained within the column.

A typical purity assay on this bleached residual Cellulose material, in the case of Aspen Wood shows a polysaccharide content in excess of 98 percent of which about 1.5 percent is xylose, 0.4% is mannose and more than 96% is glucose. In addition, the material may contain about 1.3% vegetable oil and 0.1% to 0.5% ash, dependent on the mineral content of the water which was used in the extractions.

Figure 2 is a sketch of a column, which is used to dissolve and thereby achieve a first stage separation of the various dissociated chemical components of the Explosion Processed lignocellulosic material. The column 1 is a tube open at both ends. The tube can be almost any geometric configuration in cross section from circular to triangular to rectangular and so on. The column 1 is loaded with loosely packed processed lignocellulosic material 6. At the base of the column is a filter 2 which is fine enough to prevent the processed material from passing through, yet course enough to allow dissolved solids laden eluant to flow through as fast as the column of material will permit. The column is mounted on a reducing base 3 to bring the eluant to a neck with a valved outlet 4 to control the flow rate of the column when necessary. Temperature, pH, flow rate and other sensors are mounted in the column base to provide control information to the column Command and Control System. A fine screen 5 is mounted in the top of the column to disperse the input solvent evenly over the material at the top of the column. This prevents undue compression of the material in the column.

Solvents such as water 10, followed by alcohol 9, followed by mild caustic 8 followed by bleach 7, or any combination of these can then be introduced into the top of the column and their eluants laden with solids, soluble in that particular solvent, will flow through the processed lignocellulosic material in a plug flow fashion and be collected for product recovery from the base of the column as water solubles 14, alcohol solubles 13, caustic solubles 12, and bleach solubles 11 or any combination thereof. The column can be used for various treatments such as acid or alcohol impregnation where uniform treatment of the residual material is desired and particularly when it is desired to displace one liguid with another.

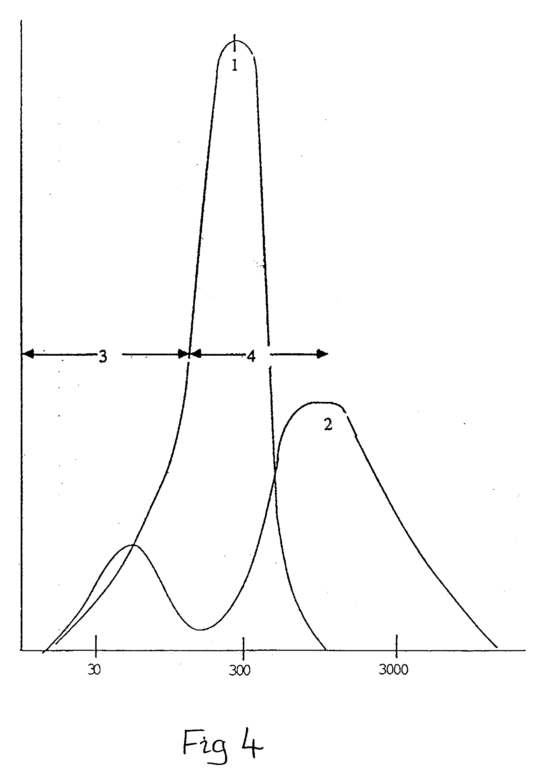

The end result is a high crystallinity, high purity, remarkably reactive, low degree of polymerization (DP) but narrow DP distribution Cellulose product, which can then be post bleach treated by various reagents to produce high value added end products, such as Cellulose Triacetate, Cellulose Acetate, Carboxymethylcellulose, Cellulose Nitrate, High Alpha Cellulose, Beta Cellulose, Mercerized Cellulose and Microcrystalline Cellulose. For instance, after bleaching, the bleach is displaced by water or alcohol to stop the bleach reaction. Alcohol would only be used if the cellulose was to be dried prior to further treatment. The alcohol reduces the heat energy required to dry the cellulose and it retains the high reactivity of the cellulose by inhibiting hydrogen bonding during the drying cycle. The Cellulose can then be partitioned into two fractions, one of which is High Alpha Cellulose (greater than DP 100) and the other fraction has a High Beta Cellulose content (less than DP 100) (See figure 4).

Figure 4 shows two Cellulose Degree of Polymerization (DP) curves. Curve 1 is Explosion Process derived Cellulose produced according to the teachings of CA-A-1,217,765. The curve was measured by Acetylating the bleached cellulose and then measuring the DP profile of the Cellulose Triacetate by High Pressure Liquid Chromatography. The assumption is that there is little reduction in the Cellulsoe DP during acetylation. Our observations of many samples, have produced remarkably consistent data which would suggest that our assumption is substantially correct. The fact that the fibrils of Cellulose are mechanically fractured at the hinge in the Explosion Process accounts for the very high but narrow distribution peak centred at DP 280.

Curve 2 is the DP curve for conventional dissolving pulp. The curve was taken from a text book illustration of a classic DP curve for conventional dissolving pulp. The broad DP distribution curve can be accounted for by the fact that DP reduction in a dissolving pulp mill is a chemical proces which attacks the cellulose chain in an indiscriminate manner.

DP range 3 is an arbitrary but age old definition of Beta Cellulose (less than DP 100). DP range 4 is the classic definition of Alpha Cellulose (greater than DP 100). Beta Cellulose is prone to excessive swelling during caustic treatments. It often forms a gel which causes poor filtering properties in the cellulose. The Beta fraction of Cellulose is easier to solubilize than is the Alpha Cellulose fraction.

If a reactive, High Alpha Mercerized Cellulose II fraction is required, the Beta Cellulose can be solubilized and thereby extracted by filtration using a 3 Molar solution of Potassium Hydroxide (See Table 1). Potassium Hydroxide is used to ensure good filterability characteristics. This extraction yields a solubilized Beta Cellulose fraction of between sixteen percent and nineteen percent of the starting weight of the bleached Cellulose on a dry basis. The Alpha Cellulose content of the residual Cellulose II fraction will exceed 90%. 95% Alpha contents can be achieved by a second extraction stage. The DP of the high alpha mercerized cellulose has a remarkably narrow distribution which peaks in the range between DP 200 and DP 500. Both the Alpha and the Beta Cellulose fractions are in a mercerized (Cellulose II) form and are crystalline, highly absorbent and reactive. If a high Alpha non-mercerized crystalline form of Cellulose, which will hydrogen bond on drying, is desired then the Alpha/Beta partitioning should be made by a 2 Molar solution of caustic solvent (See Table 1) to extract the Beta fraction. Again, Potassium Hydroxide is preferred to prevent excessive swelling and thereby ensuring good filterability characteristics. The lower caustic concentration does an effective Beta fraction separation but it will not mercerize the Cellulose I to Cellulose II. The water washed High Alpha content Cellulose I end product will hydrogen bond readily upon drying for pharmaceutical and food applications.

**Table 1**

| KOH Extraction at 20 degrees celcius | | |
|---|---|---|
| KOH Concentration at 20 degrees celcius | Experiment 1 Beta Yield | Experiment 2 Beta Yield |
| 1 Molar | 8% | 8% |
| 2 Molar | 16% | 15% |
| 2.5 Molar | 19% | 19.2% |
| 3 Molar | 17% | 17% |
| 4 Molar | 15% | 14.6% |
| 5 Molar | 15% | 14.7% |

Thus, the use of Potassium Hydroxide achieves two industrially useful results when compared to the use of the near universally used Sodium Hydroxide treatment. First, it prevents excessive swelling and thereby ensures good filterability characteristics. Secondly, the optimum concentration of Potassium Hydroxide (2.5 Molar) for partitioning the Alpha and Beta Cellulose fractions coincides quite precisely with the optimum Potassium Hydroxide concentration to achieve mercerization. Thus, Alpha/Beta separations can be efficiently achieved to raise the Alpha Cellulose content of the end product, with the option of either a mercerized or unmercerized cellulose, by changing the KOH solvent concentration from 3 Molar to 2 Molar. In this specification, the Alpha and Beta Cellulose separation and the concurrent mercerization of the bleached Steam Explosion Cellulose is done at room termperature (20 degrees celcius). Contact time in the Potassium hydroxide is short, usually about 7 minutes. The concurrence of the optimum KOH solvent extraction and the mercerization strength is an unique phenomenon particularly well suited to Explosion Process Cellulose, which has a remarkably low Hemicellulose but high Beta Cellulose content. In the dissolving pulp industry, sodium hydroxide is used to dissolve the Beta cellulose and Hemicellulose fractions of conventional dissolving pulp at a ten percent concentration and at a temperature in the range of twenty to twenty five degrees centigrade. Mercerization conditions using Sodium Hydroxide to produce Alkali (mercerized) Cellulose require concentrations of seventeen to nineteen percent NaOH at elevated temperatures between 35 and 58 degrees celcius. Fibre morphological factors, the content of fines, the homogeneity of the slurry, the slurry consistency, and the temperature are all important factors affecting the quality of Alkali Cellulose from conventional dissolving pulp sources. However, except for the viscose process mercerization has to be avoided since the reactivity of conventional dried mercerized pulp fibre is low and thus can create difficulties in subsequent acylation of the pulp. In addition, the Hemicellulose content of mercerization strength alkali becomes quite high, (15 - 35 grams per litre) in the case of the standard Sodium Hydroxide treatment of conventional pulp. This Hemicellulose contamination of the strong alkili limits its reuse, as the contaminants accumulate and recontaminate follow on batches. The Explosion Process Cellulose is less susceptible to these problems, because its Hemicellulose content after the bleach cycle is less than two percent, as compared to conventional dissolving pulp Hemicellulose concentrations, which range up to ten percent and are rarely less than five percent. The Potassium Hydroxide is recovered from the solubilized Beta Fraction by Reverse Osmosis and the Beta Cellulose is recovered by precipitating the Cellulose by the addition of water or acid to the Beta concentrate followed by filtration.

Cellulose Triacetate is one of the most important organic acid esters of Cellulose. It is used for the spinning of fibre for the textile industry, and as fibres for cigarette filter manufacture. Cellulose Triacetate film has excellent clarity for display packaging, photographic film, motion picture film and magnetic tape. It is also used for injection molding in plastic applications. Cellulose Triacetate is often hydrolysed to a lower degree of substitution to produce Cellulose Diacetate, commonly called Cellulose Acetate for a broad range of additional applications.

Normally, Cellulose Triacetate is produced from a high purity (greater than 95% alpha Cellulose) acetylation grade pulp. The usual procedure is to fluff the pulp in an Attrition Unit where it is shredded to increase its surface area for acetylation. The pulp is then pretreated with Acetic Acid plus water, at a pulp concentration of about 6%, for a period of about an hour at a temperature between 25 and 40 degrees centigrade to ensure that it is thoroughly wetted. Large volumes of Acetic Acid are then used in a solvent exchange process to reduce the water present to very low levels because the Acetic Anhydride which is used in the acetylation converts to Acetic Acid in the presence of water. An activation stage is then carried out in the Acetic Acid and Cellulose mixture, by the addition of Sulfuric Acid to a level of 1 to 2 percent of the weight of the Cellulose. The activation time is between 1 and 2 hours. This stage lowers the average DP of the Cellulose to the desired DP of the end product. Average DP levels between 150 and 300 are most common. After the activation stage the cellulose is transferred to the acetylation reactor and Acetic Anhydride is added to acetylate the cellulose to the Cellulose Triacetate end product.

Prior to the addition of the Sulphuric Acid in the activation stage, large volumes of Acetic Acid are used in a solvent exchange process to reduce the amount of water present to very low levels because the Acetic Anhydride reacts with water to form Acetic Acid. This reaction is exothermic and can produce unacceptably high temperature levels in the reactor if too much water is present, in addition to consuming the Acetic Anhydride, which is expensive. Even then, a cooling cycle is usually used to prevent overheating the Acetic Acid, Acetic Anhydride and the acid catalyst during acetylation, because high temperatures in the presence of Sulphuric Acid, cause accelerated and uncontrollable depolymerization of the Cellulose. The temperature is thus maintained below 50 degrees celcius. After the Cellulose is completely dissolved to a clear solution, acetylation is stopped by adding the solution to water to convert the excess Acetic Anhydride to Acetic Acid, which is then recovered. The applicant's improved process for producing Cellulose Acetate and Triacetate requires no Attrition Unit or lengthy Activation processes. All that is required is that the Explosion Process derived cellulose is wet with water.

Until now, it has been necessary for Cellulose Triacetate producers to purchase very high purity acetate grade dissolving pulp as a starting material. Because of the high purity requirement, Cellulose produced by conventional dissolving pulp processes has been expensive. As described above, further treatments of that pulp to condition and otherwise prepare it for acetylation have been expensive because of costly yield losses and the use and recovery from water of large volumes of Acetic Acid in the solvent exchange process.

In nature, within the lignocellulosic material, the Cellulose consists of several fibrils consisting of crystalline Cellulose hinged together by a paracrystalline or amorphous region. Our work has demonstrated that the hinge is the weak link in the Cellulose chain. The Explosion Process pretreatment when practiced according to the teachings of CA-A-1,217,765, breaks substantially all of the hinges in the Cellulose, which creates a highly crystalline Cellulose product having a remarkably narrow DP distribution which peaks at about DP 280 (See figure 4). DP 280 is close to ideal for conversion to Cellulose Triacetate. In fibres, plastics and film made from Cellulose Acetate, mechanical properties such as tensile strength, impact strength, elongation and flexural strength vary with the degree of polymerization (DP) and DP distribution. The mechanical properties improve significantly and then level off when the DP of the Cellulose Triacetate is increased from 100 to 250. If a higher DP cellulose is required for a particular application, the Explosion Process can be practiced according to the teachings of CA-A-1,141,376.

In one embodiment of this specification, Cellulose Triacetate can be produced from the highly crystalline Cellulose in the column at the end of the bleach, without separating the Alpha/Beta fractions or mercerizing the cellulose, by displacing the bleach in the column with water in a plug flow, then displacing the water with Glacial Acetic Acid. In the case of a five foot column, less than one column volume is sufficient to displace substantially all of the water in the Cellulose and to extract any residual vegetable oil. The conventional Triacetate Process displaces the water by multiple solvent exchanges in an infinite dilution process, which although the Acetic Acid is recovered, the massive quantities of Acetic Acid normally involved in the water displacement result in high recovery costs, which add significantly to the cost of the final product. In this improved embodiment the Cellulose is highly reactive and is at an optimum DP for the Cellulose Triacetate end product. Thus, the activation stage, which reduces the DP of the Cellulose, is avoided. The Acetic Acid impregnated Cellulose is transferred directly to the acetylation reactor which contains additional Acetic Acid, as a solvent for the Cellulose Triacetate, plus the required Acetic Anhydride for the acetylation reaction, plus a catalyst.

In our work to date, we have used Perchloric Acid at less than 1% of the Anhydride content as the preferred catalyst. Sulphuric Acid has been deliberately avoided because it was found that Sulphuric Acid degraded the Cellulose to a markedly lower DP and a broader DP distribution. If a low DP end product with a broad DP distribution is desireable in the end product, Sulphuric Acid should be used. If substantially no reduction in DP is desired then Perchloric Acid is an effective catalyst for use with Explosion Process derived cellulose. By displacing the water with Glacial Acetic Acid using the plug flow action of the column, the water content is negligible, resulting in a temperature rise in the reactor of only about ten degrees celcius, including the heat generated by the acetylation reaction, from a starting temperature of about 20 degrees celcius. This very slight temperature rise is indicative of the complete water displacement by the Glacial Acetic Acid in the solvent exchange step using the column. This also means that Acetic Anhydride utilization can be kept to the minimum required for acetylation, because it is not consumed by conversion to Acetic Acid by the residual water in the Acetic Acid solvent. In less than 20 minutes in the reactor, the Cellulose is acetylated sufficiently to be dissolved to a clear solution. After a further period of less than fifteen minutes to ensure complete substitution by the acetyl groups, the dissolved acetylated Cellulose is filtered to remove undissolved contaminants and precipitated in water and then washed further to ensure complete reversion of the residual Acetic Anhydride to Acetic Acid followed by recovery of the Acetic Acid. The method of precipitation can be varied to produce either powder or flake.

The Cellulose Triacetate prepared by this new process has a degree of substitution of at least 3. Because of this, and also because of its remarkably narrow DP distribution (See figure 4), it will dissolve very quickly and completely in Dichloromethane for casting or spinning without the need for alcohol to increase the inherent solvent strength of the Dichloromethane. Avoidance of the alcohol component of the solvent simplifies solvent recovery because the Dichloromethane has a vapourization temperature of only 40 degrees celcius at atmospheric pressure and it is hydrophobic.

In another embodiment of this invention a very pure high alpha content form of Cellulose Triacetate can be prepared from either high alpha Mercerized Cellulose or high alpha Unmercerized Cellulose by reacting the bleached Cellulose, after water wash, from the column with either a 3 Molar or 2 Molar solution of Potassium Hydroxide. In either case, the Potassium Hydroxide dissolves the Beta Cellulose fraction, which is recovered by filtration, preferably under pressure to recover the maximum amount of Beta Cellulose laden Potassium Hydroxide solvent. The Potassium Hydroxide is then recovered in reuseable form by separating the solvent from the Beta fraction by Reverse Osmosis. The Mercerized Beta Cellulose fraction is then recovered by precipitation and filtration. The high alpha Mercerized or Unmercerized Cellulose fractions after filtration are solvent exchanged with water and then returned to the column to drain. The water in the Cellulose is then displaced in the column by Glacial Acetic Acid. The Acetic Acid impregnated Cellulose is then transferred to the acetylation reactor which contains additional Acetic Acid, as a solvent for the Cellulose Triacetate, plus the required Acetic Anhydride for the acetylation reaction, plus a catalyst. The Acetylation procedure outlined above for the Bleached only Cellulose is followed to acetylate either the Mercerized or the Unmercerized high alpha content Cellulose to Cellulose Triacetate. The acetylated Mercerized Cellulose produces a finely divided pure, highly reactive end product in powder form. The markedly increased reactivity of the Mercerized Cellulose when compared to Unmercerized Cellulose is evidenced by the fact that complete dissolution in normal Glacial Acetic Acid, Acetic Anhydride and Perchloric Acid concentrations occurs in about two minutes.

Another embodiment of this invention provides for drying the Cellulose between the time of its preparation and its acetylation. In this case, the bleached only Cellulose, or the Mercerized or the Unmercerized high alpha Cellulose containing the water used to displace the bleach or the residual potassium hydroxide after Beta extraction can be displaced in the column by an alcohol selected from the group Ethanol, Methanol or Isopropanol or by Acetic Acid. Both the alcohol and tie Acetic Acid will markedly reduce the heat required to dry the material and the cellulose retains a small percentage of the alcohol or acetic acid which inhibits hydrogen bonding during the drying cycle and thereby retains the reactivity of the Cellulose material. In the case of the bleached only Cellulose the alcohol can be used to displace the bleach, in lieu of the liquid/liquid exchange of the bleach with water. In the case of the Acetic Acid impregnated Cellulose, the residual Acetic Acid after drying not only retains the Cellulose reactivity by inhibiting hydrogen bonding but it also inhibits colour reversion. The dried Cellulose product is reactivated with water and returned to the column to drain prior to acetylation or use in other value added conversions or applications.

## Claims

1. A method of producing bleached cellulose from dissociated lignocellulosic material, wherein said material is first produced by a steam explosion process in which undissociated lignocellulosic starting material is pressurized and steam treated in a pressure vessel, then subjected to explosive decompression and expulsion from said vessel through a mechanical stress effecting orifice thereby to produce the dissociated lignocellulosic material, characterized in that the bleached cellulose is then produced by:
(a) extracting the dissociated lignocellulosic material with water to remove the vanillin, syringaldehyde, furfuraldehyde, protein, acetic acid, glucuronic acid and xylose monomers and oligomers, then
(b) extracting the water insoluble material with an alcohol selected from the group isopropanol, ethanol and methanol to remove the vegetable oil and lignin, followed by a mild, less than 2%, caustic solution selected from the group of sodium hydroxide, lithium hydroxide or potassium hydroxide to dissolve and thereby extract the high DP xylose oligomers and a lignin/furfuraldehyde copolymer, usually referred to as pseudolignin, or extracting the water insoluble material directly with mild, less than 2%, caustic selected from the group of sodium hydroxide, lithium hydroxide or potassium hydroxide, then
(c) bleaching the water, alcohol and/or caustic extracted dissociated lignocellulosic material with bleach at a concentration of less than 2%, then
(d) solvent exchanging the bleach with water or alcohol to terminate the bleaching action.

2. A method according to claim 1 in which in step (d) of claim 1, solvent exchange is with alcohol and then alcohol impregnated cellulose is dried to recover the alcohol by evaporation.

3. A method according to claim 1 in which in step (d) of claim 1, solvent exchange is with water, then the water is solvent exchanged with acetic acid to inhibit hydrogen bonding and colour reversion during drying, then acetic acid impregnated cellulose is dried to recover the acetic acid by evaporation.

4. A method according to claim 1, for preparing a high alpha cellulose content cellulose I, by separating the beta cellulose from the bleached cellulose, comprising:
(a) transferring the bleached cellulose to a potassium hydroxide solution, at a temperature of about 20 degrees Celsius, which when diluted by the residual water in the cellulose, results in a caustic strength in the range of 2 molar, then
(b) thoroughly mixing the cellulose into the caustic solution to dissolve the beta cellulose component, then
(c) separating the potassium hydroxide solvent containing the beta cellulose fraction by filtration, then
(d) solvent exchange the residual potassium hydroxide solution in the high alpha cellulose I with water.

5. A method according to claim 1, for preparing cellulose II, sometimes referred to as mercerized cellulose, from bleached cellulose, and simultaneously separating the beta cellulose therefrom to increase the alpha cellulose content of the mercerized cellulose II product, comprising:
(a) transferring the bleached cellulose to a potassium hydroxide solution, at a temperature of about 20 degrees Celsius, which when diluted by the residual water in the cellulose, results in a caustic strength in the range of 3 molar, then
(b) thoroughly mixing the cellulose into the caustic solution to mercerize the cellulose and to simultaneously dissolve the beta cellulose component, then
(c) separating the potassium hydroxide solvent containing the beta cellulose fraction by filtration, then
(d) solvent exchanging the residual potassium hydroxide solution in the high alpha mercerized cellulose II product with water.

6. A method according to claim 4 or claim 5, where the water impregnated unmercerized or mercerized cellulose is solvent exchanged in the column with alcohol to inhibit hydrogen bonding during drying and then dried to recover the alcohol by evaporation.

7. A method according to claim 4 or claim 5, where the water impregnated unmercerized or mercerized cellulose is solvent exchanged in the column with acetic acid to inhibit hydrogen bonding and colour reversion during drying and then dried to recover the acetic acid by evaporation.

8. A method according to claim 1, for acetylating the bleached cellulose to cellulose triacetate comprised of:
(a) displacing the water from the bleached cellulose in the column with glacial acetic acid, then
(b) transferring the glacial acetic acid impregnated cellulose to an acetylation reactor containing additional glacial acetic acid to act as a solvent for the cellulose triacetate, acetic anhydride and a catalyst until the cellulose dissolves to a clear solution, then
(c) after a further period of less than 15 minutes to ensure complete acetylation, filtering the clear cellulose triacetate solution to recover any undissolved contaminants, then
(d) precipitate the cellulose triacetate in water, and then further water wash the precipitated cellulose triacetate to ensure that all of the excess acetic anhydride is converted to acetic acid, then
(e) recover the acetic acid by solvent extraction or evaporation.

9. A method according to claim 4 or claim 5, for preparing a remarkably pure and reactive form of cellulose triacetate from high alpha content unmercerized or mercerized cellulose containing water, comprising:
(a) transferring the water laden cellulose to a column to drain, then
(b) displacing the water from the bleached cellulose in the column with glacial acetic acid, then
(c) transferring the glacial acetic acid impregnated cellulose to an acetylation reactor containing additional glacial acetic acid to act as a solvent for the cellulose triacetate, plus acetic anhydride and a catalyst until the cellulose dissolves to a clear solution, then
(d) after a further period of less than 15 minutes to ensure complete acetylation, filtering the clear cellulose triacetate solution to remove any undissolved contaminants, then
(e) precipitate the cellulose triacetate solution in water and further water wash the cellulose triacetate to ensure that all of the excess acetic anhydride is converted to acetic acid, then
(f) recover the acetic acid by solvent extraction or evaporation.

10. A method according to claim 6 or claim 7 for preparing a remarkably pure and reactive form of cellulose triacetate from dried cellulose, either mercerized or unmercerized comprising:
(a) slurrying the dried cellulose with water and placing it in a column to drain
(b) displacing the water from the bleached unmercerized or mercerized cellulose in the column with glacial acetic acid, then
(c) transferring the glacial acetic acid impregnated cellulose to an acetylation reactor containing additional glacial acetic acid to act as a solvent for the cellulose triacetate, plus acetic anhydride and a catalyst until the cellulose dissolves to a clear solution, then
(d) after a further period of less than 15 minutes to ensure complete acetylation, filtering the clear cellulose triacetate solution to remove any undissolved contaminants, then
(e) precipitate the cellulose triacetate solution in water and further water wash the cellulose triacetate to ensure that all of the excess acetic anhydride is converted to acetic acid, then
(f) recover the acetic acid by solvent extraction or evaporation.

11. A method according to claim 4 or claim 5 of recovering a substantial portion of the potassium hydroxide solvent and the beta cellulose fraction by:
(a) concentrating the solubilized beta cellulose by removal of a substantial portion of the potassium hydroxide solvent from the beta cellulose fraction by reverse osmosis, then
(b) removing the beta cellulose by ultrafiltration or by adding water or acid to the beta concentrate to precipitate the beta fraction and filter.

12. The method according to claim 1, 2, or 3, wherein the bleach is a buffered hypochlorite bleach.

13. Bleached, low degree of polymerization (DP) mercerized cellulose II pulp produced according to the method defined in claim 5, having a purity of at least 98 percent, and having substantially improved reactivity over the same dried sample before mercerization and a remarkably narrow DP distribution which peaks between 200 and 500 and is suitable for a wide range of value added conversions to cellulose derivatives and uses.

14. Bleached, low degree of polymerization (DP) high alpha, low beta cellulose I pulp produced according to the method defined in claim 4, having a purity of at least 97 percent, and a remarkably narrow DP distribution which peaks between 200 and 500 and is suitable for a wide range of value added conversions to cellulose derivatives and uses.

## Patentansprüche

1. Verfahren zum Herstellen von gebleichter Cellulose aus dissoziiertem Holzcellulosematerial, wobei das Material zunächst durch ein Dampfexplosionsverfahren gebildet wird, bei dem undissoziiertes Holzcellulose-Ausgangsmaterial in einem Druckgefäß gepreßt und dampfbehandelt wird, dann einem Drucksturz und einer Austreibung aus dem Gefäß durch eine mechanischen Streß bewirkende Öffnung unterzogen wird, wodurch das dissoziierte Holzcellulosematerial erzeugt wird, dadurch gekennzeichnet, daß die gebleichte Cellulose dann hergestellt wird durch:
(a) Extrahieren des dissoziierten Holzcellulosematerials mit Wasser, um das Vanillin, den Syringaldehyd, den Furfuraldehyd, Protein, Essigsäure, Glukuronsäure und Xylosemonomere und -oligomere zu extrahieren, dann
(b) Extrahieren des wasserunlöslichen Materials mit einem Alkohol ausgewählt aus der Gruppe Isopropanol, Ethanol und Methanol, um pflanzliches Öl und Lignin zu entfernen, gefolgt von einer milden, weniger als 2 %-igen alkalischen Lösung, ausgewählt aus der Gruppe Natriumhydroxid, Lithiumhydroxid oder Kaliumhydroxid, um die Xyloseoligomere mit hohem DP und ein Lignin/Furfuraldehyd-Copolymer, das üblicherweise als Pseudolignin bezeichnet wird, aufzulösen und dadurch zu extrahieren, oder das wasserunlösliche Material direkt mit einem milden, weniger als 2 %-igen Alkali, ausgewählt aus der Gruppe Natriumhydroxid, Lithiumhydroxid oder Kaliumhydroxid zu extrahieren, dann
(c) Bleichen des mit Wasser, Alkohol und/oder Alkali extrahierten dissoziierten Holzcellulosematerials mit Bleichmittel bei einer Konzentration von weniger als 2 %, dann
(d) Solvensaustausch des Bleichmittels mit Wasser oder Alkohol, um die Bleichwirkung zu beenden.

2. Verfahren nach Anspruch 1, wobei in Stufe (d) von Anspruch 1 der Solvensaustausch mit Alkohol stattfindet, und dann alkoholgetränkte Cellulose getrocknet wird, um den Alkohol durch Verdampfen wiederzugewinnen.

3. Verfahren nach Anspruch 1, wobei in Stufe (d) von Anspruch 1 der Solvensaustausch mit Wasser stattfindet, das Wasser dann durch Solvensaustausch mit Essigsäure ausgetauscht wird, um die Ausbildung von Wasserstoffbrückenbindungen und Farbreversion während des Trocknens zu inhibieren, dann die essigsäuregetränkte Cellulose getrocknet wird, um die Essigsäure durch Verdampfung wiederzugewinnen.

4. Verfahren nach Anspruch 1 zum Herstellen einer Cellulose I mit einem hohen Gehalt an Alphacellulose durch Abtrennen der Betacellulose aus der gebleichten Cellulose, umfassend:
(a) Übertragen der gebleichten Cellulose in eine Kaliumhydroxidlösung bei einer Temperatur von etwa 20 °C, die, wenn sie durch das Restwasser in der Cellulose verdünnt wird, eine Alkalistärke im Bereich von 2 molar ergibt, dann
(b) sorgfältiges Mischen der Cellulose in die alkalische Lösung, um die Betacellulosekomponente aufzulösen, dann
(c) Trennen des die Betacellulosefraktion enthaltenden Kaliumhydroxidsolvens durch Filtrieren, dann
(d) Solvensaustausch der restlichen Kaliumhydroxidlösung in der Cellulose I mit hohem Alphaanteil mit Wasser.

5. Verfahren nach Anspruch 1 zum Herstellen von Cellulose II, die manchmal als mercerisierte Cellulose bezeichnet wird, aus gebleichter Cellulose und gleichzeitiges Abtrennen der Betacellulose davon, um den Alphacellulosegehalt des mercerisierten Cellulose-II-Produkts zu erhöhen, umfassend:
(a) Überführen der gebleichten Cellulose in eine Kaliumhydroxidlösung bei einer Temperatur von etwa 20 °C, die, wenn sie durch das Restwasser in der Cellulose verdünnt wird, eine Alkalistärke im Bereich von 3 molar ergibt, dann
(b) sorgfältiges Mischen der Cellulose in die Alkalilösung, um die Cellulose zu mercerisieren und um gleichzeitig die Betacellulosekomponente aufzulösen, dann
(c) Abtrennen des die Betacellulosefraktion enthaltenden Kaliumhydroxidsolvens durch Filtrieren, dann
(d) Solvensaustausch der restlichen Kaliumhydroxidlösung in dem mercerisierten Cellulose-II-Produkt mit hohem Alphaanteil mit Wasser.

6. Verfahren nach Anspruch 4 oder nach Anspruch 5, wobei die wassergetränkte unmercerisierte oder mercerisierte Cellulose in der Säule mit Alkohol einem Solvensaustausch unterzogen wird, um das Ausbilden von Wasserstoffbrückenbindungen während des Trocknens zu inhibieren, und dann getrocknet wird, um den Alkohol durch Verdampfung wiederzugewinnen.

7. Verfahren nach Anspruch 4 oder Anspruch 5, wobei die wassergetränkte unmercerisierte oder mercerisierte Cellulose in der Säule einem Solvensaustausch mit Essigsäure unterzogen wird, um das Ausbilden von Wasserstoffbrückenhindungen und Farbreversion während des Trocknens zu inhibieren, und dann getrocknet wird, um die Essigsäure durch Verdampfen wiederzugewinnen.

8. Verfahren nach Anspruch 1 zum Acetylieren der gebleichten Cellulose zu Cellulosetriacetat, umfassend:
(a) Ersetzen des Wassers aus der gebleichten Cellulose in der Säule mit Eisessig, dann
(b) Überführen der eisessiggetränkten Cellulose in einen Acetylierungsreaktor, der zusätzlichen Eisessig, der als Solvens für das Cellulosetriacetat wirkt, Essigsäureanhydrid und einen Katalysator enthält, bis sich die Cellulose zu einer klaren Lösung auflöst, dann
(c) nach einer weiteren Zeitspanne von weniger als 15 Minuten, um eine vollständige Acetylierung zu gewährleisten, Filtern der klaren Cellulosetriacetatlösung, um jegliche unaufgelöste Verunreinigungen zurückzugewinnen, dann
(d) Ausfällen des Cellulosetriacetats in Wasser und dann weiteres Waschen des ausgefällten Cellulosetriacetats mit Wasser, um zu gewährleisten, daß sämtliches überschüssiges Acetanhydrid in Essigsäure umgewandelt wird, dann
(e) Rückgewinnen der Essigsäure durch Solvensextraktion oder durch Verdampfung.

9. Verfahren mach Anspruch 4 oder nach Anspruch 5 zum Herstellen einer bemerkenswert reinen und reaktiven Form von Cellulosetriacetat aus unmercerisierter oder mercerisierter Cellulose mit einem hohen Alphagehalt, die Wasser enthält, umfassend:
(a) Überführen der mit Wasser beladenen Cellulose in eine Säule zum Entwässern, dann
(b) Ersetzen des Wassers aus der gebleichten Cellulose in der Säule mit Eisessig, dann
(c) Überführen der mit Eisessig getränkten Cellulose in einen Acetylierungsreaktor, der zusätzlichen Eisessig, der als ein Solvens für das Cellulosetriacetat wirkt, plus Acetanhydrid und einen Katalysator enthält, bis sich die Cellulose zu einer klaren Lösung auflöst, dann
(d) nach einer weiteren Zeitspanne von weniger als 15 Minuten, um vollständige Acetylierung zu gewährleisten, Abfiltrieren der klaren Cellulosetriacetatlösung, um jegliche unaufgelöste Verunreinigungen zu entfernen, dann
(e) Ausfällen der Cellulosetriacetatlösung in Wasser und weiteres Waschen des Cellulosetriacetats mit Wasser, um zu gewährleisten, daß sämtliches überschüssiges Acetanhydrid in Essigsäure umgewandelt wird, dann
(f) Wiedergewinnen der Essigsäure durch Solvensextraktion oder durch Verdampfung.

10. Verfahren nach Anspruch 6 oder Anspruch 7 zum Herstellen einer bemerkenswert reinen und reaktiven Form von Cellulosetriacetat aus getrockneter Cellulose, die entweder mercerisiert oder unmercerisiert ist, umfassend:
(a) Aufschlämmen der getrockneten Cellulose mit Wasser und Einbringen der Cellulose in eine Säule zum Entwässern,
(b) Ersetzen des Wassers aus der gebleichten unmercerisierten oder mercerisierten Cellulose in der Säule mit Eisessig, dann
(c) Überführen der mit Eisessig getränkten Cellulose in einen Acetylierungsreaktor, der zusätzlichen Eisessig, der als ein Lösungsmittel für das Cellulosetriacetat wirkt, plus Essigsäureanhydrid und einen Katalysator enthält, bis die Cellulose sich zu einer klaren Lösung auflöst, dann
(d) nach einer weiteren Zeitspanne von weniger als 15 Minuten, um eine vollständige Acetylierung zu gewährleisten, Abfiltrieren der klaren Cellulosetriacetatlösung, um jegliche ungelöste Verunreinigungen zu entfernen, dann
(e) Ausfällen der Cellulosetriacetatlösung in Wasser und weiteres Waschen des Cellulosetriacetats mit Wasser, um zu gewährleisten, daß sämtliches Überschüssiges Acetanhydrid zu Essigsäure umgewandelt wird, dann
(f) Wiedergewinnen der Essigsäure durch Solvensextraktion oder durch Verdampfung.

11. Verfahren nach Anspruch 4 oder Anspruch 5 zum Rückgewinnen eines wesentlichen Teiles des Kaliumhydroxidsolvens und der Betacellulosefraktion durch:
(a) Konzentrieren der solubilisierten Betacellulose durch Entfernen eines wesentlichen Teils des Kaliumhydroxidsolvens aus der Betacellulosefraktion durch reverse Osmose, dann
(b) Entfernen der Betacellulose durch Ultrafiltration oder durch Zugeben von Wasser oder Säure zu dem Betakonzentrat, um die Betafraktion auszufällen, und Filtrieren.

12. Verfahren nach Anspruch 1, 2 oder 3, wobei das Bleichmittel ein gepuffertes Hypochloritbleichmittel ist.

13. Gebleichte, mercerisierte Cellulose-II-Pulpe mit einem niedrigen Polymerisationsgrad (DP), hergestellt nach dem in Anspruch 5 definierten Verfahren, die eine Reinheit von mindestens 98 % aufweist und eine im wesentlichen verbesserte Reaktivität gegenüber derselben getrockneten Probe vor der Mercerisierung und eine bemerkenswert enge DP-Verteilung aufweist, deren Spitzenwerte zwischen 200 und 500 liegen und die für einen breiten Bereich der Veredelung zu Cellulosederivaten und -Verwendungen geeignet ist.

14. Gebleichte Cellulose-I-Pulpe mit hohem Alphagehalt, niedrigem Betagehalt, die einen niedrigen Polymerisationsgrad (DP) aufweist, hergestellt nach dem in Anspruch 4 definierten Verfahren, die eine Reinheit von mindestens 97 % aufweist und die eine bemerkenswert enge DP-Verteilung aufweist, deren Spitzenwerte zwischen 200 und 500 liegen und die für einen breiten Bereich für die Veredelung zu Cellulosederivaten und -Verwendungen geeignet ist.

## Revendications

1. Un procédé de fabrication de cellulose blanchie à partir de matériau lignocellulosique dissocié, dans lequel ledit matériau est d'abord produit par un procédé d'explosion à la vapeur dans lequel le matériau de départ lignocellulosique non dissocié est mis sous pression et traité à la vapeur dans un récipient sous pression, puis soumis à une décompression explosive et à une expulsion dudit récipient par un orifice produisant des contraintes mécaniques pour produire le matériau lignocellulosique dissocié, caractérisé en ce que la cellulose blanchie est alors produite par:
(a) extraction du matériau lignocellulosique dissocié à l'eau afin d'éliminer la vanilline, la syringaldéhyde, le furfuraldéhyde, les protéines, l'acide acétique, l'acide glucuronique et les oligomères et monomères de xylose; et
(b) extraction du matériau insoluble dans l'eau avec un alcool sélectionné dans le groupe comprenant l'isopropanol, l'éthanol et le méthanol afin d'éliminer l'huile végétale et la lignine, suivie par une solution de base faible, inférieure à 2%, choisie dans le groupe comprenant l'hydroxyde de sodium, l'hydroxyde de lithium ou l'hydroxyde de potassium pour dissoudre et par la même extraire les oligomères de xylose de degré de polymérisation élevé et un copolymère lignine/furfuraldéhyde, généralement dénommé pseudolignine, ou extraction du matériau insoluble dans l'eau directement avec une base faible, inférieure à 2%, sélectionnée dans le groupe comprenant l'hydroxyde de sodium, l'hydroxyde de lithium ou l'hydroxyde de potassium; puis
(c) blanchiment du matériau lignocellulosique dissocié extrait à l'eau, à l'alcool et/ou à l'aide d'une base, avec une concentration d'agent de blanchiment inférieure à 2%; puis
(d) échange de l'agent de blanchiment par un solvant constitué d'eau ou d'alcool pour terminer l'action de blanchiment.

2. Un procédé selon la revendication 1, dans lequel, dans l'étape (d) de la revendication 1, l'échange de solvant se fait avec de l'alcool puis la cellulose imprégnée d'alcool est séchée pour récupérer l'alcool par évaporation.

3. Un procédé selon la revendication 1, dans lequel, dans l'étape (d) de la revendication 1, l'échange de solvant se fait avec de l'eau, puis l'eau est échangée par un solvant constitué d'acide acétique pour inhiber la liaison de l'hydrogène et l'inversion de couleur au cours du séchage, puis la cellulose imprégnée d'acide acétique est séchée pour récupérer l'acide acétique par évaporation.

4. Un procédé selon la revendication 1, pour préparer une cellulose I à teneur élevée en cellulose alpha, par séparation de la cellulose bête de la cellulose blanchie, comprenant:
(a) le transfert de la cellulose blanchie dans une solution d'hydroxyde de potassium, à une température d'environ 20°C, qui, lorsqu'elle est diluée par l'eau résiduaire dans la cellulose, résulte en une basicité de l'ordre de 2 molaires; puis
(b) le mélange intime de la cellulose dans la solution de base pour dissoudre la cellulose bête; puis
(c) la séparation du solvant à base d'hydroxyde de potassium contenant la fraction de cellulose bête par filtration, puis
(d) l'échange de la solution d'hydroxyde de potassium résiduaire dans la cellulose I riche en cellulose alpha par un solvant constitué d'eau.

5. Un procédé selon la revendication 1, de préparation de cellulose II, parfois appelée cellulose mercerisée, à partir de cellulose blanchie, et simultanément séparation de la cellulose bête de cette dernière pour augmenter la teneur en cellulose alpha de la cellulose II mercerisée produite comprenant:
(a) le transfert de la cellulose blanchie dans une solution d'hydroxyde de potassium, à une température d'environ 20°C, qui, lorsqu'elle est diluée par l'eau résiduaire dans la cellulose, résulte en une basicité de l'ordre de 3 molaires; puis
(b) le mélange intime de la cellulose dans la solution basique pour merceriser la cellulose et simultanément pour dissoudre la cellulose bête; puis
(c) la séparation du solvant à base d'hydroxyde de potassium contenant la fraction de cellulose bête par filtration, puis
(d) l'échange de la solution d'hydroxyde de potassium résiduaire dans la cellulose II riche en cellulose alpha mercerisée par un solvant constitué d'eau.

6. Un procédé selon la revendication 4 ou la revendication 5, dans lequel la cellulose mercerisée ou non mercerisée imprégnée d'eau est soumise à un échange de solvant dans la colonne avec l'alcool pour inhiber la liaison de l'hydrogène au cours du séchage, puis séchée pour récupérer l'alcool par évaporation.

7. Un procédé selon la revendication 4 ou la revendication 5, dans lequel la cellulose mercerisée ou non mercerisée imprégnée d'eau est soumise à un échange de solvant dans la colonne avec de l'acide acétique pour inhiber la liaison de l'hydrogène et l'inversion de couleur au cours du séchage, puis séchée pour récupérer l'acide acétique par évaporation.

8. Un procédé selon la revendication 1, pour l'acétylation de la cellulose blanchie en cellulose blanchie triacétate de cellulose comprenant:
(a) le déplacement de l'eau de la cellulose blanchie dans la colonne avec de l'acide acétique glacial, puis
(b) le transfert de la cellulose imprégnée d'acide acétique glacial dans un réacteur d'acétylation contenant de l'acide acétique glacial supplémentaire pour agir en tant que solvant pour le triacétate de cellulose, de l'anhydride acétique et un catalyseur jusqu'à ce que la cellulose se dissolve en une solution claire; puis
(c) après une période supplémentaire inférieure à 15 minutes pour permettre l'acétylation complète, la filtration de la solution de triacétate de cellulose claire pour récupérer tout contaminant non dissous; puis
(d) la précipitation du triacétate de cellulose dans l'eau, puis lavage supplémentaire à l'eau du triacétate de cellulose précipité pour s'assurer que tout l'excès d'anhydride acétique soit converti en acide acétique; puis
(e) la récupération de l'acide acétique par extraction au solvant ou par évaporation.

9. Un procédé selon la revendication 4 ou la revendication 5, de préparation de triacétate de cellulose remarquablement pur et sous forme réactive à partir d'une cellulose mercerisée ou non mercerisée à teneur alpha élevée contenant de l'eau, comprenant:
(a) le transfert de la cellulose chargée d'eau dans une colonne pour drainage; puis
(b) le déplacement de l'eau de la cellulose blanchie dans la colonne avec de l'acide acétique glacial; puis
(c) le transfert de la cellulose imprégnée d'acide acétique glacial dans un réacteur d' acétylation contenant de l' acide acétique glacial supplémentaire pour agir en tant que solvant pour le triacétate de cellulose, plus de l'anhydride acétique et un catalyseur jusqu'à ce que la cellulose se dissolve en une solution claire; et
(d) après une période supplémentaire inférieure à 15 minutes pour s'assurer de l'acétylation complète, la filtration de la solution de triacétate de cellulose claire pour éliminer tout contaminant non-dissous; puis
(e) la précipitation de la solution de triacétate de cellulose dans l'eau et le lavage à l'eau supplémentaire du triacétate de cellulose pour s'assurer que tout l'anhydride acétique en excès soit converti en acide acétique; puis
(f) la récupération de l'acide acétique par extraction au solvant
ou par évaporation.

10. Un procédé selon la revendication 6 ou la revendication 7 de préparation de triacétate de cellulose remarquablement pur et sous forme réactive à partir de cellulose séchée, soit mercerisée, soit non mercerisée, comprenant:
(a) la mise en suspension de la cellulose séchée avec de l'eau et son placement dans une colonne pour drainage;
(b) le déplacement de l'eau de la cellulose blanchie mercerisée ou non mercerisée, dans la colonne avec de l'acide acétique glacial; puis
(c) le transfert de la cellulose imprégnée d'acide acétique glacial dans un réacteur d'acétylation contenant de l'acide acétique glacial supplémentaire pour agir en tant que solvant pour le triacétate de cellulose, plus de l'anhydride acétique et un catalyseur jusqu'à ce que la cellulose se dissolve en une solution claire;
(d) après une période supplémentaire inférieure à 15 minutes pour s'assurer de l'acétylation complète, la filtration de la solution de triacétate de cellulose claire pour en éliminer tout contaminant non dissous; puis
(e) la précipitation de la solution de triacétate de cellulose dans l'eau et le lavage à l'eau supplémentaire du triacétate de cellulose pour s'assurer que tout anhydride acétique en excès soit converti en acide acétique; puis
(f) la récupération de l'acide acétique par extraction au solvant ou par évaporation.

11. Un procédé selon la revendication 4 ou la revendication 5, de récupération d'une partie substantielle du solvant à base d'hydroxyde de potassium et de la fraction de cellulose bêta par:
(a) concentration de la cellulose bêta solubilisée par élimination d'une partie substantielle du solvant à base d'hydroxyde de potassium de la fraction de cellulose bêta par osmose inverse; puis
(b) élimination de la cellulose bêta par ultrafiltration ou par addition d'eau ou d'acide au concentré bêta pour précipiter la fraction bêta et filtration.

12. Le procédé selon la revendication 1, 2 ou 3, dans lequel l'agent de blanchiment est un agent de blanchiment à base d'hypochlorite tamponné.

13. Pulpe de cellulose II mercerisée d'un faible degré de polymérisation (DP), blanchie, produite selon le procédé défini dans la revendication 5, présentant une pureté d'au moins 98% et ayant une réactivité sensiblement améliorée par rapport au même échantillon séché avant mercerisation et une distribution de DP particulièrement étroite dont les pics sont compris entre 200 et 500, appropriée à une large gamme de conversions à valeur ajoutée en dérivés de cellulose et d'utilisations.

14. Pulpe de cellulose I à teneur bêta faible et teneur alpha élevée, de degré de polymérisation faible (DP), blanchie, produite selon le procédé défini dans la revendication 4, présentant une pureté d'au moins 97%, et une distribution de DP particulièrement étroite dont les pics sont compris entre 200 et 500, appropriée à une large gamme de conversions à valeur ajoutée en dérivés de cellulose et d'utilisations.
